Europäisches Patentamt

European Patent Office

Office européen des brevets

(19)

(11) Numéro de publication: **0 004 218**
**B1**

(12)                    **FASCICULE DE BREVET EUROPEEN**

(45) Date de publication du fascicule de brevet: **02.09.81**

(21) Numéro de dépôt: **79400109.9**

(22) Date de dépôt: **23.02.79**

(51) Int. Cl.³: **G 21 C 15/18, F 28 D 7/00, F 22 B 1/06**

(54) **Réacteur nucléaire à neutrons rapides comportant au moins un échangeur auxiliaire.**

(30) Priorité: **07.03.78 FR 7806435**

(43) Date de publication de la demande:
**19.09.79 Bulletin 79/19**

(45) Mention de la délivrance du brevet:
**02.09.81 Bulletin 81/35**

(84) Etats Contractants Désignés:
**BE DE GB IT**

(73) Titulaire: **COMMISSARIAT A L'ENERGIE ATOMIQUE Etablissement de Caractère Scientifique Technique et Industriel B.P. 510 F-75752 Paris Cedex 15 (FR)** ·

(72) Inventeur: **Pomie, Pierre Parc Rigaud Les Pinchinats F-13100 Aix en Provence (FR)**
Inventeur: **Verriere, Philippe Montée des Genêts F-04100 Manosque (FR)**

(74) Mandataire: **Mongredien, André et al, c/o Brevatome 25, rue de Ponthieu F-75008 Paris (FR)**

(56) Documents cités:
DE - A - 1 551 037
DE - A - 2 346 868
DE - A - 2 430 161
DE - A - 2 517 693
DE - C - 818 959
FR - A - 1 399 180
FR - A - 2 179 839
FR - A - 2 283 523
FR - A - 2 288 285
FR - A - 2 335 791
FR - A - 2 357 987

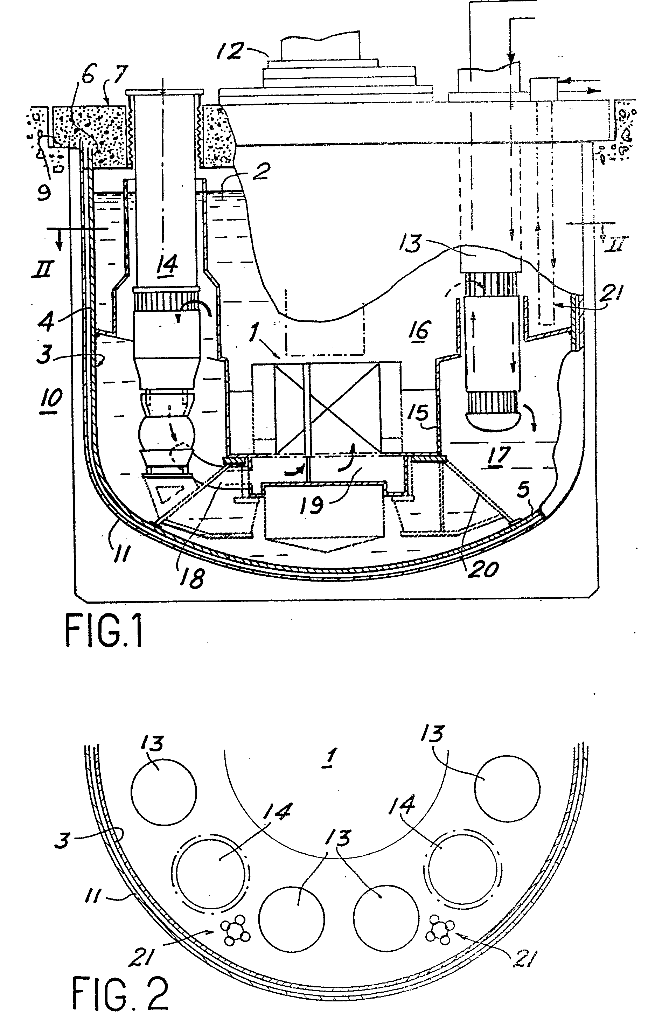

KERNTECHNIK, vol. 15, No 2, Jan. 1973
M. KOEHLER et al.: "Der Reaktortank des SNR—300"; passage 3 "Notkühlsystem", figure 2

Courier Press, Leamington Spa, England.

Réacteur nucléaire à neutrons rapides comportant au moins un échangeur auxiliaire

La présente invention a pour objet un réacteur nucléaire à neutrons rapides comportant au moins un échangeur auxiliaire permettant notamment le refroidissement du métal liquide (par exemple du sodium) en cas d'incident de fonctionnement provoquant l'arrêt des pompes primaires.

On sait que dans un tel type de réacteur, notamment du genre dit "intégré", le coeur est immergé sous le niveau d'un volume déterminé de métal liquide contenu dans une cuve à axe vertical, suspendue sous une dalle épaisse, horizontale, traversée par des corps de pompes primaires et d'échangeurs intermédiaires, assurant respectivement en fonctionnement la circulation continue et le refroidissement du sodium en extrayant de celui-ci les calories acquises à la traversée du coeur par suite de la fission nucléaire dans ce dernier. On conçoit aisément qu'en cas d'incident, provoquant pour quelque raison que ce soit, l'arrêt des pompes primaires, le coeur dans lequel la réaction de fission est immédiatement arrêtée grâce à la chute de barres de sécurité, dégage encore une puissance calorifique résiduelle importante qu'il convient d'éliminer de façon sûre et efficace afin d'éviter une fusion locale du coeur.

La présente invention est relative à un réacteur muni d'un échangeur auxiliaire qui répond en particulier à ces impératifs.

Un tel réacteur est connu notamment du FR - A - 2 357 987. Toutefois, il présente l'inconvénient que l'échangeur auxiliaire n'est pas démontable et constitue un circuit unique, de sorte que toute défaillance de l'échangeur a pour conséquence de supprimer toute possibilité de refroidissement du réacteur en cas d'arrêt des pompes primaires, sans qu'il soit possible d'y remédier.

Par ailleurs on sait que, en général, la partie centrale de la dalle est occupée par un système de bouchons tournants et qu'ainsi la partie "fixe" de la dalle supérieure se limite en fait à une couronne annulaire. De plus dans le cas des réacteurs intégrés cette couronne est déjà largement occupée en particulier par les pompes primaires et par les échangeurs intermédiaires principaux c'est-à-dire les échangeurs intermédiaires qui assurent normalement l'évacuation de la puissance fournie par le réacteur. On comprend donc qu'il est particulièrement intéressant de concevoir les échangeurs auxiliaires de telle façon qu'ils n'occupent dans la dalle (traversée de dalle) qu'une place réduite pour une puissance calorifique donnée.

A cet effet le réacteur à neutrons rapides considéré comportant une cuve à axe vertical contenant le coeur du réacteur, un volume de métal liquide de refroidissement de celui-ci et au moins un échangeur de chaleur principal et au moins un échangeur auxiliaire, ladite cuve étant fermée à sa partie supérieure par une dalle, se caractérise en ce que l'échangeur auxiliaire est constitué par une pluralité de modules d'échange verticaux, chaque module comportant un circuit parcouru par un fluide de refroidissement, ladite dalle étant percée pour chaque échangeur auxiliaire d'un orifice cylindrique vertical dont la dimension en section horizontale est supérieure à celle d'un module d'échange mais inférieure à celle de l'ensemble de l'échangeur auxiliaire en section horizontale, et des bouchons de protection aptes à obturer le ou lesdits orifices après la mise en place desdits modules d'échange, lesdits modules étant disposés autour d'un prolongement axial dudit bouchon.

Selon un premier mode de mise en oeuvre le circuit de chaque module est constitué par un tube d'échange raccordé à ses extrémités respectivement à un tube d'amenée et à un tube d'évacuation du fluide de refroidissment, les tubes d'amenée et d'évacuation s'étendant parallèlement à l'axe du bouchon dans une rainure prévue dans celui-ci selon une de ses génératrices verticales.

Selon un deuxième mode de mise en oeuvre le circuit de chaque module est constitué par une pluralité de tubes en U raccordée à un collecteur d'entrée et un collecteur de sortie, lesdits collecteurs étant associés respectivement à un tube d'amenée et à un tube d'évacuation du fluide de refroidissment, les tubes d'amenée et d'évacuation s'étendant parallèlement à l'axe du bouchon dans une rainure prévue dans celui-ci selon une de ses génératrices verticales.

Selon un troisième mode de mise en oeuvre le circuit de chaque module d'échange est constitué par une pluralité de tubes droits raccordés à leurs extrémités à un collecteur d'entrée et à un collecteur de sortie, lesdits collecteurs étant eux-mêmes raccordés respectivement à un tube d'amenée et à un tube d'évacuation du fluide refroidissement les tubes d'amenée et d'évacuation s'étendant parallèlement à l'axe dudit bouchon dans une rainure prévue dans celui-ci selon une de ses génératrices verticales.

Selon une autre caractéristique particulière enfin, chaque module comporte à son extrémité inférieure un doigt de centrage, apte à s'engager dans un logement prévu dans une structure d'appui montée dans la cuve et solidaire de celle-ci.

Grâce à ces dispositions, chaque module de l'échangeur auxiliaire peut être démontable individuellement, l'ensemble de ces modules, une fois monté à l'intérieur de la cuve, se répartissant selon un cercle de diamètre supérieur à celui du passage vertical prévu dans la dalle pour l'introduction un à un de chacun de ces modules.

D'autres caractéristiques d'un échangeur auxiliaire établi conformément à l'invention, apparaîtront encore à travers la description qui suit d'exemples de réalisation, donnés à titre indicatif et non limitatif, en référence aux dessins annexés sur lesquels:

— la figure 1 est une vue schématique en coupe transversale partielle d'un réacteur nucléaire à neutrons rapides, comportant des échangeurs auxiliaires selon l'invention,

— la figure 2 est une vue en coupe partielle selon la ligne II—II de la figure 1,

— la figure 3 est une vue en coupe verticale à plus grande échelle, illustrant le détail de la réalisation d'un des échangeurs auxiliaires du réacteur de la figure 1,

— les figures 4 et 5 sont des vues à deux échelles différentes, respectivement en coupe transversale à grande échelle et en élévation à plus faible échelle, permettant d'expliciter la manière dont les modules de chaque échangeur auxiliaire sont introduits ou retirés de l'intérieur de la cuve, et

— les figures 6a à 6c représentent des variantes de réalisation du circuit du fluide de refroidissement.

On a schématiquement représenté sur la figure 1, une vue en coupe d'un réacteur nucléaire à neutrons rapides, à structure intégrée. Le coeur 1 du réacteur est immergé dans un volume 2 d'un métal liquide de refroidissement, habituellement du sodium, contenu à l'intérieur d'une cuve 3 à axe vertical. Cette cuve comporte une virole cylindrique latérale 4 et un fond sensiblement hémisphérique 5, l'extrémité ouverte 6 de la virole étant encastrée dans une dalle épaisse 7, en béton, fermant la cuve au-dessus du niveau du sodium cette dalle comportant un épaulement périphérique 9 reposant de manière étanche sur un rebord d'appui prévu dans un caisson de protection extérieur 10, délimitant l'installation. La cuve 3 est également doublée à l'intérieur du caisson 10 par une seconde cuve 11, dite cuve de sécurité.

De façon classique, la dalle supérieure 7 est traversée par une série de composants, nécessaires au fonctionnement du réacteur. Notamment, la dalle supporte un système central de bouchons tournants 12, schématiquement représentés et situés latéralement par rapport à celui-ci, des échangeurs principaux intermédiaires 13 et des pompes primaires de circulation 14, régulièrement répartis autour du coeur, de telle sorte qu'à une pompe de circulation 14 correspondent ici deux échangeurs 13, comme l'illustre la vue en coupe transversale partielle de la figure 2.

Le sodium 2 contenu dans la cuve 3 se répartit dans cette dernière selon deux régions, de part et d'autre d'une cuve interne 15, délimitant deux collecteurs 16 et 17, le sodium chaud à la sortie du coeur, après traversée des échangeurs 13, étant recueilli sous la cuve interne 15 pour être repris par les pompes 14 et renvoyé à travers des conduits de large section 18 dans un caisson 19 prévu sous le coeur 1 à l'intérieur d'un sommier de support 20 de ce dernier. En fonctionnement, le sodium circule ainsi en permanence à travers le coeur, les échangeurs principaux 13 permettant l'extraction des calories dégagées par la réaction de fission, ces calories étant ensuite exploitées dans des générateurs extérieurs (non représentés) pour produire de la vapeur détendendu dans les turbines d'une installation fournissant de l'électricité.

Selon l'invention, on dispose également à l'intérieur de la cuve 3 sous la dalle 7, une série d'échangeurs auxiliaires 21 permettant, en cas d'arrêt des pompes primaires 14, d'assurer encore le refroidissement convenable du sodium chaud provenant du collecteur 16 et sa mise en circulation autorisant ainsi l'évacuation de la puissance résiduelle du réacteur.

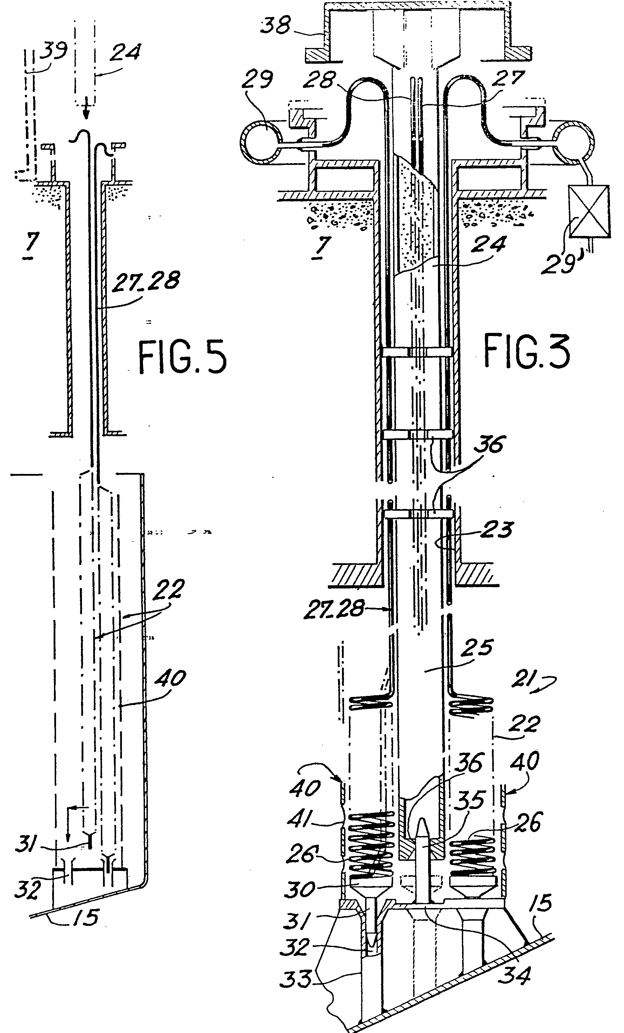

La figure 3 illustre à plus grande échelle le détail de la réalisation d'un des échangeurs 21, ceux-ci étant montés dans la cuve comme l'illustre la figure 2, notamment au voisinage immédiat des pompes et des échangeurs.

Chaque échangeur 21 est constitué d'une pluralité de modules 22 (au nombre de quatre dans l'exemple considéré), l'échangeur auxiliaire étant disposé à l'intérieur de la cuve au droit d'un passage cylindrique 23 ménagé à travers la dalle 7 et normalement obturé en fonctionnement par un bouchon de protection 24 contenant une série de plaques d'acier 36. Le passage 23 présente une dimension diamétrale notablement inférieure à celle de l'échangeur auxiliaire 21, cette dimension étant en revanche supérieure à celle de chacun des modules individuels 22, afin de permettre, selon une caractéristique importante de l'invention, l'introduction de chacun de ces modules un à un à l'intérieur de la cuve avant mise en place du bouchon 24, une fois l'échangeur complet mis en place. Le bouchon 24 comporte un prolongement inférieur 25, pénétrant dans la cuve et autour duquel sont répartis les modules 22. Chacun de ces modules se compose, dans l'exemple de réalisation considéré, d'un serpentin 26 dont les extrémités sont raccordées à deux tubes, respectivement 27 et 28, pour l'amenée et l'évacuation d'un fluide de refroidissement, circulant à l'intérieur de chaque serpentin. Les tubes 27 et 28 s'étendent dans le passage 23 parallèlement à l'axe du bouchon 24 et sont raccordés à l'extérieur du réacteur et au-dessus de la dalle 7 à un moyen de pompage 29' permettant d'assurer la circulation du fluide de refroidissement. Avantageusement, ce dernier est constitué par du sodium liquide.

Plus précisément les tubes d'amenée 27 des modules sont raccordés à un collecteur annulaire d'introduction (non représenté) alors que les tubes d'évacuation 28 sont raccordés à un collecteur annulaire 29. Le collecteur 29 est associé à un moyen de pompage 29' que est de préférence une pompe électromagnétique.

O 004 218

Afin d'assurer le support des modules 22 une fois introduits dans la cuve 3, chacun de ces modules comporte une plaquette d'appui inférieure 30, prolongée par un doigt de centrage axial 31, apte à s'engager dans un logement 32 ménagé dans l'axe d'une chandelle de support 33, elle-même rendue solidaire de la cuve interne 15 délimitant les collecteurs chaud 16 et froid 17. Avantageusement, ces chandelles 33 sont solidarisées d'une platine supérieure 34 comportant au centre de l'échangeur un doigt vertical 35, s'engageant dans un passage 36 ménagé dans l'axe du prolongement 25 prévu axialement sous le bouchon 24.

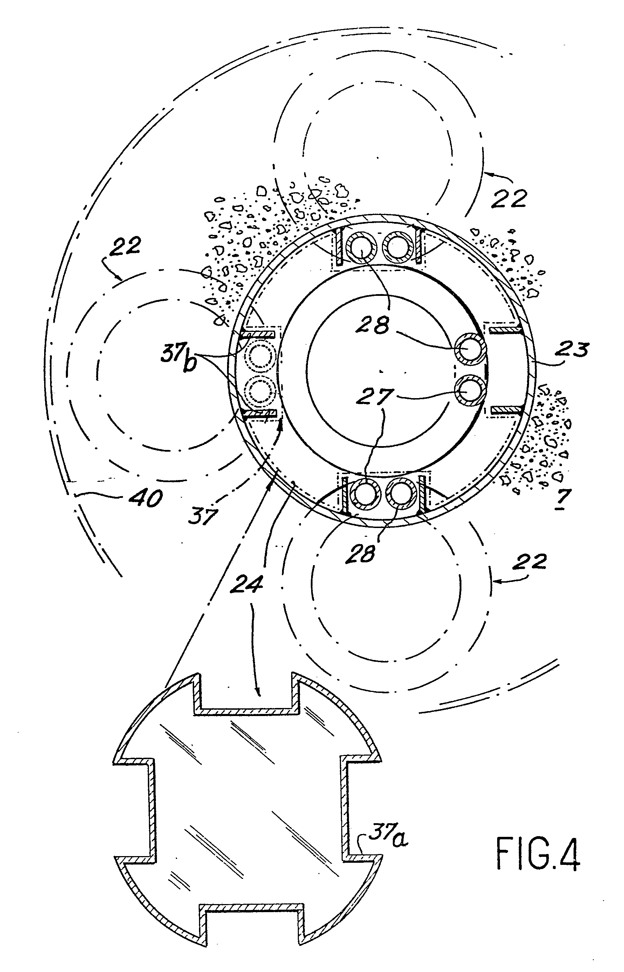

La figure 4 illustre à plus grande échelle en coupe tranversale, certains détails des modules 22 et du bouchon de fermeture 24 du passage 23, permettant notamment de mieux expliciter le processus de mise en place des modules dans la cuve. Sur cette figure, le bouchon 24 est représenté retiré de son passage 23, de manière à permettre l'engagement un à un de chacun de ces modules 22, celui-ci une fois introduit dans le passage 23 et descendu jusqu'à pénétrer dans la cuve 3, étant ensuite décalé latéralement de telle sorte que ses tubes 27 et 28 viennent s'engager dans un logement 37 prévu dans la surface latérale interne du passage 23 et délimité par deux plaques radiales 37b. Ce logement 37 est également délimité par une encoche 37a de même profil ménagée dans le bouchon 24. Dans l'exemple de réalisation représenté, on prévoit ainsi quatre logements 37—37a permettant le montage dans la cuve de quatre modules 22, répartis autour de l'axe du prolongement 25 une fois le bouchon 24 mis en place.

Pour procéder de la même manière au démontage d'un des modules précédents en cas d'avarie accidentelle par exemple, on réalise dans un premier temps l'enlèvement d'un couvercle de protection et d'étanchéité 38 placé à l'extérieur et au-dessus de la dalle, pour accéder aux extrémités des tubes 27 et 28, puis on sectionne ces extrémités. Dans la phase suivante, après mise en place d'une hotte de protection 39 au-dessus du bouchon 24, on procéde au retrait de ce dernier puis du module défectueux à traverse le passage 23, la sortie du module s'effectuant en dégageant son doigt de centrage 31 de son logement 32, puis après un mouvement de décalage latéral pour amener le module dans l'axe du passage 23, à son soulèvement jusqu'à l'intérieur de la hotte à l'extérieur de l'enceinte du réacteur. Le module défectueux peut alors être remplacé par un module neuf en procédant exactement dans l'ordre inverse.

On réalise ainsi un échangeur d'ultime secours pour réacteur nucléaire, notamment à neutrons rapides, apte à présenter une surface d'échange importante sans que chaque module qui le constitue nécessite pour sa mise en place dans la cuve, un passage de dimension diamètrale trop importante. Les dispositions de l'invention permettent en outre un montage et démontage aisés de chaque module individuellement.

Il est important d'observer que les échangeurs auxiliaires 22 jouent d'autres rôles que celui d'échangeur d'ultime secours au sens où cette fonction a été définie précédemment. En fait le circuit dans lequel circule le fluide de refroidissement est parcouru en permanence par celui-ci. Cela signifie donc que la fonction d'évacuation de la puissance résiduelle peut être remplie à tout instant. En outre, lors du fonctionnement normal du réacteur, les échangeurs auxiliaires participent à l'évacuation de la puissance thermique. Enfin ils servent lors des opérations de manutention des assemblages combustibles du coeur du réacteur. En effet, dans ce cas le sodium doit être maintenu à une température de l'ordre de 180°C. Les échangeurs auxiliaires participent au maintien de cette température.

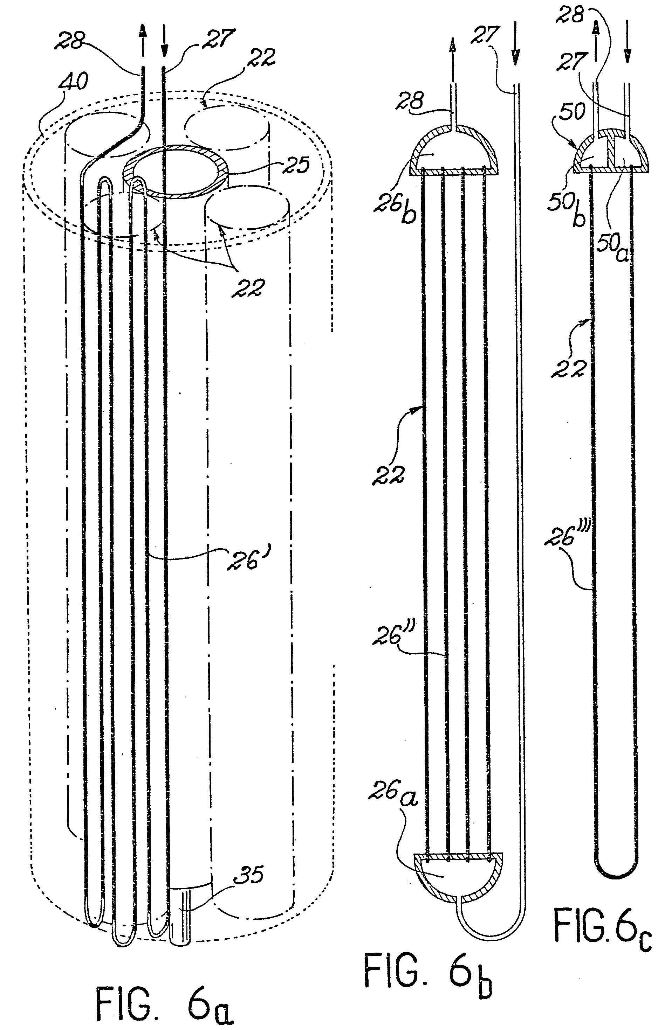

Bien entendu, il va de soi que l'invention ne se limite pas au seul exemple de réalisation plus spécialement décrit et représenté ci-dessus; elle en embrasse au contraire toutes les variantes. Notamment, on pourrait prévoir de disposer autour de l'ensemble de modules 22 une virole de guidage et de protection 40 (figure 3). Dans ce cas, cette virole 40 comporte des ouvertures 41 pour autoriser le contact du sodium dans la cuve 3 avec le serpentin 26. Egalement, on pourrait prévoir de remplacer ce dernier par un faisceau de tubes d'échange de forme différente. On peut selon la figure 6a remplacer les tubes en serpentin par un tube ayant la forme d'une succession de tubes en épingle à cheveux. Sur cette figure on a représenté le tube d'échange 26' ayant la forme indiquée qui est raccordé à ses extrémités aux tubes 27 et 28 d'amenée et d'évacuation, ces deux tubes se présentant comme cela a déjà été décrit en liaison avec la figure 3.

Sur la figure 6b on a représenté une autre variante de réalisation du faisceau d'échange thermique. Il est constitué par un nombre convenable de tubes d'échange 26'' que sont des tubes droits fixés entre un collecteur d'entrée 26a et un collecteur de sortie 26b. Les tubes 27 et 28 sont raccordés aux collecteurs 26a et 26b.

Selon la variante de la figure 6c le faisceau d'échange est constitué par des tubes en U 26''' associés à un collecteur 50 qui selon une technique connue est séparé en deux demi collecteurs 50a et 50b respectivement d'entrée et de sortie. Ces deux demi collecteurs sont raccordés aux tubes 27 et 28.

Bien entendu quel que soit le mode de réalisation particulier du faisceau d'échange on retrouve les avantages déjà indiqués.

**Revendications**

1. Réacteur nucléaire du type à neutrons

4

## O 004 218

rapides comportant une cuve (3) à axe vertical contenant le coeur (1) du réacteur, un volume (2) de métal liquide de refroidissement de celui-ci, au moins un échangeur de chaleur principal (13) et au moins un échangeur auxiliaire (21) ladite cuve étant fermée à sa partie supérieure par une dalle (7), caractérisé en ce que l'échangeur auxiliaire (21) est constitué par une pluralité de modules d'échange verticaux (22), chaque module comportant un circuit (26, 27, 28) parcouru par un fluide de refroidissement, ladite dalle (7) étant percée pour chaque échangeur auxiliaire d'un orifice cylindrique vertical (23) dont la dimension en section horizontale est supérieure à celle d'un module d'échange (22) mais inférieure à celle de l'ensemble de l'échangeur auxiliaire (21) en section horizontale, et des bouchons de protection (24) aptes à obturer le ou lesdits orifices (23) après la mise en place desdits modules d'échange, lesdits modules (22) étant disposés autour d'un prolongement axial (25) dudit bouchon.

2. Réacteur nucléaire selon la revendication 1, caractérisé en ce que le circuit de chaque module (22) est constitué par un tube d'échange (26) raccordé à ses extrémités respectivement à un tube d'amenée (27) et à un tube d'évacuation (28) du fluide de refroidissement, les tubes d'amenée et d'évacuation s'étendant parallèlement à l'axe du bouchon (24) dans une rainure (37a) prévue dans celui-ci selon une de ses génératrices verticales.

3. Réacteur nucléaire selon la revendication 2, caractérisé en ce que ledit tube d'échange (26) a la forme d'un serpentin.

4. Réacteur nucléaire selon la revendication 2, caractérisé en ce que ledit tube d'échange (26') a la forme d'une succession d'épingles inversées.

5. Réacteur nucléaire selon la revendication 1, caractérisé en ce que le circuit de chaque module (22) est constitué par une pluralité de tubes en U (26''') raccordée à un collecteur d'entrée (50a) et à un collecteur de sortie (50b), lesdits collecteurs étant associés respectivement à un tube d'amenée (27) et à un tube d'évacuation (28) du fluide de refroidissement, les tubes d'amenée et d'évacuation s'étendant parallèlement à l'axe du bouchon dans une rainure (37a) prévue dans celui-ci selon une de ses génératrices verticales.

6. Réacteur nucléaire selon la revendication 1, caractérisé en ce que ledit circuit de chaque module d'échange (22) est constitué par une pluralité de tubes droits (26'') raccordés à leurs extrémités à un collecteur d'entrée (26a) et à un collecteur de sortie (26b), lesdits collecteurs étant eux-mêmes raccordés respectivement à un tube d'amenée (27) et à un tube d'évacuation (28) du fluide de refroidissement, les tubes d'amenée et d'évacuation s'étendant parallèlement à l'axe dudit bouchon dans une rainure (37a) prévue dans celui-ci selon une de ses génératrices verticales.

7. Réacteur nucléaire selon l'une quelconque des revendications 2 à 6, caractérisé en ce que chacun des tubes d'amenée (27) et d'évacuation (28) des modules d'un même échangeur est raccordé à l'extérieur de la cuve et au-dessus de la dalle à un collecteur annulaire (29), le collecteur de sortie étant associé à un moyen de pompage (29') du fluide.

8. Réacteur nucléaire selon la revendication 7, caractérisé en ce que le fluide de refroidissement est du sodium liquide et en ce que les moyens de pompage (29') sont constitués par une pompe électromagnétique.

9. Réacteur nucléaire selon l'une quelconque des revendications 1 à 8, caractérisé en ce que les modules (22) constituant un même échangeur auxiliaire (21) sont entourés extérieurement par une virole de guidage (40) cylindrique et ajourée.

10. Réacteur nucléaire selon l'une quelconque des revendications 1 à 9, caractérisé en ce que chaque module d'échange (22) comporte à son extrémité inférieure un doigt de centrage (31) apte à s'engager dans un logement (32) prévu dans une structure d'appui (33) montée dans la cuve (3) et solidaire de celle-ci.

### Patentansprüche

1. Schneller Nuklearreaktor mit einem Behälter (3), dessen Achse vertikal verläuft und der den Kern (1) des Reaktors enthält, mit einem Volumen (2) flüssigen Metalls zu dessen Kühlung, mit wenigstens einem Hauptwärmeaustauscher (13) und weinigstens einem Hilfswärmeaustauscher (21), wobei der Behälter in seinem oberen Bereich durch eine Platte (7) geschlossen ist, dadurch gekennzeichnet, daß der Hilfswärmeaustauscher (21) durch eine Vielzahl von vertikalen Wärmeaustauschmodulen (22) gebildet ist, wobei jeder Modul eine von einem Kühlfluid durchflossene Leitung (26,27,28) aufweist, daß die Platte (7) für jeden Hilfswärmeaustauscher mit einer zylindrischen, vertikalen Öffnung (23) durchbohrt ist, deren Abmessung in horizontalem Schnitt größer als die eines Austauschermoduls (22) jedoch kleiner als die der Gesamtheit des Hilfswärmeaustauschers (21) im horizontalen Querschnitt ist, und daß Schutzeinsätze (74) vorgesehen sind, durch die nach der Anordnung der Austauschmodulen die Öffnung(en) (23) gefüllt werden kann bzw. können, wobei die Modulen (22) um eine axiale Verlängerung (25) des Einsatzes angeordnet sind.

2. Nuklearreaktor nach Anspruch 1, dadurch gekennzeichnet, daß die Leitung eines jeden Moduls (22) von einem Austauscherrohr (26) gebildet ist, welches mit seinen Enden mit einem Einlaßrohr (27) bzw. einem Auslaßrohr (28) für das Kühlfluid verbunden ist, wobei sich das Einlaßund das Auslaßrohr parallel zur Achse des Einsatzes (24) in einer Rille (37a) erstrecken, welche in jenem längs einer seiner vertikalen Erzeugenden vorgesehen ist.

3. Nuklearreaktor nach Anspruch 2, dadurch gekennzeichnet, daß das Austauscherrohr (26) schlangenförmig ausgebildet ist.

4. Nuklearreaktor nach Anspruch 2, dadurch gekennzeichnet, daß das Austrauscherrohr (26') in der Form einer Folge von umgekehrten Haarnadeln ausgebildet ist.

5. Nuklearreaktor nach Anspruch 1, dadurch gekennzeichnet, daß die Leitung eines jeden Moduls (22) durch eine Vielzahl von U-Rohren (26''') gebildet ist, die mit einem Einlaßsammler (50a) und einem Auslaßsammler (50b) verbunden sind, wobei die Sammler einem Einlaßrohr (27) bzw. einem Auslaßrohr (28) für das Kühlfluid zugeordnet sind, und daß sich die Einlaß- und die Auslaßrohre parallel zur Achse des Einsatzes in einer Rille (37a) erstrecken, die in diesem längs einer seiner vertikalen Erzeugenden vorgesehen ist.

6. Nuklearreaktor nach Anspruch 1, dadurch gekennzeichnet, daß die Leitung eines jeden Wärmeaustauschermoduls (22) durch eine Vielzahl von geraden Rohren (26'') gebildet ist, die an ihren Enden mit einem Einlaßsammler (26a) und einem Auslaßsammler (26b) verbunden sind, daß die Sammler selbst mit einem Einlaßrohr (27) und mit einem Auslaßrohr (28) für das Kühlfluid verbunden sind, und daß sich das Einlaßrohr und das Auslaßrohr parallel zur Achse des Einsatzes in einer Rille (37a) erstrecken, welche in diesem längs einer seiner vertikalen Erzeugenden vorgesehen ist.

7. Nuklearreaktor nach irgendeinem der Ansprüche 2 bis 6, dadurch gekennzeichnet, daß jedes Einlaßrohr (27) und Auslaßrohr (28) der Modulen des gleichen Wärmeaustauschers außerhalb des Behälters und oberhalb der Platte mit einem Ringsammler (29) verbunden ist, wobei dem Auslaßsammler eine Pumpeinrichtung (29') für das Fluid zugeordnet ist.

8. Nuklearreaktor nach Anspruch 7, dadurch gekennzeichnet, daß das Kühlfluid flüssiges Natrium ist und daß die Pumpeinrichtungen (9') durch eine elektromagnetische Pumpe gebildet sind.

9. Nuklearreaktor nach irgendeinem der Ansprüche 1 bis 8, dadurch gekennzeichnet, daß die Modulen (22), die den selben Hilfswärmeaustauscher (21) bilden, außen von einer zylinderförmigen, durchbrochenen Führungsmanschette (40) umgeben sind.

10. Nuklearreaktor nach irgendienem der Ansprüche 1 bis 9, dadurch gekennzeichnet, daß jedes Wärmeaustauschermodul (22) an seinem unteren Ende einen Zentrierungsstift (31) aufweist, der mit einer Aufnahme (32) in Eingriff bringbar ist, die in einer Stützanordnung (33) vorgesehen ist, welche in dem Behälter (3) angeordnet und mit diesem fest verbunden ist.

## Claims

1. Nuclear reactor of the fast neutron type comprising a tank (3) with a vertical axis containing the reactor core (1), a volume (2) of liquid metal coolant, at least one principal heat exchanger (13) and at least one secondary exchanger (21), said reactor being closed at its upper part by a lid (7), characterised in that the auxiliary exchanger (21) is constituted by a plurality of vertical exchange modules (22), each module comprising a circuit (26,27,28) in which a coolant fluid circulates, said lid (7) being pierced for each auxiliary exchanger by a vertical cylindrical orifice (23) whose horizontal cross-sectional dimensions exceed those of an exchange module (22) but are less than the total cross-sectional dimensions of the auxiliary exchanger (21), and protective plugs (24) adapted to close the said orifice or orifices (23) after installation of the said exchange modules, said modules being disposed around an axial prolongation of the said plug.

2. Nuclear reactor according to Claim 1 characterized in that the circuit of each module is constituted by an exchange tube (26) whose ends are respectively connected to an inlet tube (27) and an outlet tube (28) for coolant fluid, the inlet and outlet tubes extending parallel to the axis of plug (24) in a vertically-extending groove (37a) provided in one of its surfaces.

3. Nuclear reactor according to Claim 2 characterized in that said exchange tube (26) has the form of a coil.

4. Nuclear reactor according to Claim 2 characterized in that said exchange tube (26') has the form of a series of linked hairpins.

5. Nuclear reactor according to Claim 1 characterized in that the circuit of each module (22) is constituted by a plurality of U-tubes (26''') connected to an inlet manifold (50a) and an outlet manifold (50b), said manifolds being respectively associated with an inlet tube (27) and an outlet tube (28) for coolant fluid, said inlet and outlet tubes extending parallel to the axis of the plug in a vertically-extending groove (37a) provided in one of its surfaces.

6. Nuclear reactor according to Claim 1 characterized in that the said circuit of each module (22) is constituted by a plurality of straight tubes (26'') connected at their extremities to an inlet manifold (26a) and an outlet manifold (26b), said manifolds themselves being respectively connected to an inlet tube (27) and an outlet tube (28) for coolant fluid, said inlet and outlet tubes extending parallel to the axis of the said plug in a vertically-extending groove (37a) provided in one of its surfaces.

7. Nuclear reactor according to any one of Claims 2 to 6 characterized in that each of the inlet (27) and outlet (28) tubes of the modules of any one exchanger is connected, externally of the tank and above the lid, to an annular manifold (29), the outlet manifold being associated with a fluid pumping means (29').

8. Nuclear reactor according to Claim 7 characterized in that the coolant fluid is liquid sodium and the pumping means (29') comprises an electromagnetic pump.

9. Nuclear reactor according to any one of Claims 1 to 8 characterized in that the modules (22) constituting any one auxiliary exchanger (21) are surrounded by a perforated cylindrical guiding collar (40).

10. Nuclear reactor according to any of Claims 1 to 9 characterized in that each module (22) carries at its lower end a centering finger (31) adapted to engage in a recess (32) provided in a projecting structure (33) solidly mounted within the tank (3).

7

FIG.1

FIG. 2

0 004 218

FIG.5

FIG.3

FIG.4

FIG. 6a

FIG. 6b

FIG. 6c

4